# EUROPÄISCHE PATENTSCHRIFT

(11) **EP 1 203 102 B1**
(45) Veröffentlichungstag und Bekanntmachung des Hinweises auf die Patenterteilung: **24.03.2004**
(21) Anmeldenummer: 01905476.6
(22) Anmeldetag: 15.02.2001
(51) Int. Cl.: C21B 3/08, C04B 5/06

(54) **EINRICHTUNG ZUM ZERSTÄUBEN VON FLÜSSIGEN SCHMELZEN**
DEVICE FOR ATOMISING LIQUID MELTS
DISPOSITIF POUR PULVERISER DES MATIERES FONDUES LIQUIDES

(30) Priorität: 22.02.2000 AT 2752000
(43) Veröffentlichungstag der Anmeldung: 08.05.2002
(73) Patentinhaber: Holcim Ltd., 8645 Jona (CH)
(72) Erfinder: EDLINGER, Alfred, A-6780 Bartholomäberg (AT)
(74) Vertreter: Haffner, Thomas M., Dr.
(86) Internationale Anmeldenummer: PCT/AT2001/000036
(87) Internationale Veröffentlichungsnummer: WO 2001/062987

(56) Entgegenhaltungen:
- WO-A-99/42623
- AT-B- 403 927
- US-A- 4 502 633
- US-A- 4 993 691
- US-A- 5 667 147

## Beschreibung

Die Erfindung bezieht sich auf eine Einrichtung zum Zerstäuben von flüssigen Schmelzen, insbesondere oxidischen Schlacken oder Gläsern, mit einem Schlackentundish und einer Auslaßöffnung, in welche eine Lanze zum Einstoßen von Gasen oder Dampf unter Ausbildung eines Ringspaltes eintaucht.

Für die Zerstäubung und das Granulieren flüssiger Schlacken sind eine Reihe von Vorschlägen bekannt geworden, bei welchen flüssige Schlacken aus einem Schlackentundish über eine Austrittsöffnung entweder im freien Strahl in einem Kühlraum ausgebracht werden oder nachfolgend noch im Kühlraum mit Dampf und/oder Kaltwasser beaufschlagt werden, sodaß eine rasche und intensive, glasartige Erstarrung ermöglicht wird. Als Treibstrahl wurde in diesem Zusammenhang neben Dampf auch Hochdruckkaltwasser vorgeschlagen, wobei naturgemäß auch Inertgase für das Ausstoßen der flüssigen Schmelzen geeignet sind. Wenn bei einem derartigen Verfahren Dampf als Treibstrahl eingesetzt wird, kann es bei entsprechend intensiver Abkühlung dazu kommen, daß durch Kondensation im nachfolgenden Kühlraum ein Unterdruck entsteht. Im Falle der Verwendung von Kaltwasser kommt es zu einer raschen Verdampfung beim Kontakt mit flüssigen Schmelzen, sodaß sich hier ggf. ein Überdruck aufbauen kann. Insbesondere im Bereich der Austrittsöffnungen herrschen daher unterschiedliche Druckverhältnisse vor, wobei im Bereich des Düsenspaltes ein Unterdruck ebenso wie ein Überdruck entstehen kann. Um nun die entsprechende Zerstäubung sicherzustellen und an die jeweiligen Bedingungen anzupassen und vor allen Dingen um sicherzustellen, daß eine entsprechende feine Zerstäubung erfolgt, ist es erforderlich, die Düsengeometrie den jeweiligen Bedingungen anzupassen.

Bei den bisherigen Ausbildungen wurde die Lanze zum Einstoßen von Gasen oder Dampf entweder oberhalb des flüssigen Schmelzenspiegels angeordnet und auf diese Weise einem geringeren Verschleiß unterworfen, wodurch die Ausstoßcharakteristik naturgemäß in hohem Maße von der Schlackenbadhöhe bzw. von der Höhe des Schmelzebades abhängig war. Bei Ausbildungen, bei welchen die Lanze in die flüssige Schmelze eintaucht, müssen naturgemäß entsprechend hochtemperaturfeste Werkstoffe Verwendung finden, wobei die Einhaltung einer definierten Strahlgeometrie und einer definierten Zerstäubung dadurch erschwert wird, daß eine Erstarrung im Bereich der Auslaßöffnung zu Änderungen der Spaltgeometrie und zu Veränderungen der Teilchengrößeverteilung der zerstäubten Tröpfchen führt.

Die Erfindung zielt nun darauf ab, eine Einrichtung der eingangs genannten Art zu schaffen, mit welcher es in einfacher Weise gelingt, einem Anwachsen eines Schlackenpelzes durch Erstarrung im Bereich der Auslaßöffnung entgegenzuwirken und mit welcher es gleichzeitig gelingt, die gewünschten Strahlparameter den jeweiligen Verhältnissen anzupassen. Zur Lösung dieser Aufgabe besteht die erfindungsgemäße Einrichtung im wesentlichen darin, daß die Lanze von zwei koaxialen Rohren gebildet ist, welche gesondert voneinander in axialer Richtung verstellbar sind und in ihrer jeweiligen axialen Verschiebelage festlegbar sind. Dadurch, daß zwei koaxiale Rohre angeordnet sind, kann durch eine relative Verschiebung dieser beiden Rohre zueinander die Einlaßspaltbreite für die flüssige Schmelze mit dem Außenrohr eingestellt werden, wohingegen die gewünschten Strahlparameter durch entsprechende Verstellung des Innenrohres an die Vorgaben, wie beispielsweise Druck oder Art des Treibstrahlmediums angepaßt werden können. Weiters gelingt es mit einer derartigen Ausbildung der Lanze aus zwei koaxialen Rohren unterschiedliche Werkstoffe einzusetzen und beispielsweise eine Hülse bzw. ein Außenrohr aus hochtemperaturfester Keramik oder kostengünstigem Graphit anzuordnen, wohingegen das Innenrohr der Lanze aus entsprechend hochtemperaturfestem Stahl oder gleichfalls aus keramischem Material bestehen kann und durch die Hülse vor übermäßigem korrosiven oder thermischem Angriff durch die Schmelze geschützt wird. Insgesamt gelingt es durch die Verwendung einer Hülse als Verschleißteil, die Betriebskosten einer derartigen Einrichtung wesentlich zu senken und gleichzeitig die Parameter für die gewünschte Tröpfchenausbildung bzw. Strahlausbildung in weiten Grenzen einzustellen.

Graphit als Material für die Hülse ist naturgemäß nur dann geeignet, wenn Kohlenstoff in der zu zerstäubenden Schmelze nicht lösbar ist. Dies gilt für Schmelzen, welche weder Metalle noch Eisen- oder Chromoxide enthalten. Graphit als Material für das Außenrohr stellt einen besonders kostengünstigen Verschleißteil dar, welcher gleichzeitig die Möglichkeit bietet, einem Zuwachsen der Austrittsöffnung wirksam zu begegnen.

Mit Vorteil ist die Ausbildung erfindungsgemäß so getroffen, daß die Auslaßöffnung als Düsenstein und das Außenrohr bzw. die Hülse der Lanze aus elektrisch leitfähigem Material, insbesondere Graphit, bestehen, wobei dann, wenn auch der Düsenstein aus elektrisch leitfähigem Material ausgebildet ist, in einfacher Weise eine elektrische Beheizung, beispielsweise durch Ausbildung eines Lichtbogens zwischen der Hülse und dem Düsenstein im Bereich der Eintrittsöffnung und der Beaufschlagung mit dem Treibstahl erfolgen kann, sodaß eine konstante Düsengeometrie im Betrieb sichergestellt werden kann. Bei Verwendung einer derartigen Beheizung im Bereich des Düsenspaltes kann aber noch ein weiterer bedeutender Vorteil der erfindungsgemäßen Ausgestaltung genutzt werden. Prinzipiell gilt nämlich, daß mit zunehmender Dampftemperatur die Tröpfchen bzw. die entsprechenden erstarrenden Partikel feiner werden, wobei dies unter anderem auf eine entsprechende Verbesserung der Rheologie der Tröpfchen zurückgeführt werden kann. Hohe Enddampftemperaturen erfordern aber in aller Regel eine entsprechend aufwendige Dampferzeugung und eine entsprechend aufwendige Zuleitung von Hochtemperaturdampf zur Lanze. Dadurch, daß nun eine Endaufheizung bzw. Endüberhitzung des Dampfes beispielsweise durch einen Elektrolichtbogen erfolgt, kann mit wesentlich geringeren Dampftemperaturen und beispielsweise mit Dampftemperaturen von etwa 700° C bei einem Dampfdruck von maximal 10 bar eine Überhitzung des Dampfes auf maximal 1600° C erreicht werden. Die Dampferzeugung gestaltet sich somit entsprechend kostengünstiger und die Temperaturbelastung der Dampflanze wird stark reduziert. Die Überhitzung von "Kaltdampf" im Düsenbereich führt hierbei unter anderem dazu, daß die Lanze selbst vom Dampfdruck entlastet wird, da hier der Druck bereits in Strahlgeschwindigkeit umgewandelt ist und das Strahlrohr somit nur noch einer wesentlich geringeren thermischen Belastung unterliegt.

Gemäß einer weiteren bevorzugten Ausbildung besteht das zentrale Rohr der Lanze aus keramischem Material oder aus hochtemperaturfestem Stahl, wodurch die Bedingungen für eine exakte Strahlgeometrie einfacher eingehalten werden können. Während bei üblichen Lanzen aus Stahl mit einer thermischen Deformation und ggf. sogar mit einem Abschmelzen der Mündung der Lanze gerechnet werden muß, gelingt es bei Verwendung einer Hülse aus entsprechend temperaturbeständigem Material, die unmittelbare Einwirkung der Schlacke von der Mündung des zentralen Rohres bzw. des Innenrohres fernzuhalten, sodaß die Konstanz der Strahlgeometrie über einen längeren Zeitraum aufrecht erhalten werden kann.

In besonders vorteilhafter Weise ist die Ausbildung so getroffen, daß der Düsenstein eine konische Einlauföffnung und eine entgegengesetzt konisch ausgebildete, zur Mündung divergierende Auslaßöffnung aufweist, wodurch sichergestellt wird, daß durch eine entsprechende axiale Verschiebung der Einlaufspalt und die wesentlichen Zerstäubungsparameter in einfacher Weise eingestellt werden können.

Wie bereits eingangs erwähnt, ist es von besonderem Vorteil, wenn die Geometrie der Auslaßöffnung von Einflüssen, wie beispielsweise einem Zuwachsen durch Erstarren, freigehalten werden kann und es entspricht daher einer bevorzugten Ausbildung, daß der Düsenstein und das Außenrohr bzw. die Hülse mit einer Stromquelle zur Ausbildung einer elektrischen Beheizung im Bereich des Düsensteins verbunden sind.

Ist durch die Einstellung der wesentlichen Zerstäubungsparameter also eine deutliche Erhöhung der Zerstäubungsfeinheit zu beobachten, so kann die Größe der zerstäubten Schmelzetröpfchen dadurch noch weiter verkleinert werden, daß, wie es einer bevorzugten Ausbildung entspricht, koaxial zur Auslauföffnung in einer an den Schlackentundish angeschlossenen Sprühkammer wenigstens eine Ringdüse angeordnet ist, wobei bevorzugt die Achsen der Düsenaustrittsöffnungen im wesentlichen parallel zur Achse der Lanze oder divergierend gerichtet sind. Im Bereich der über die Auslauföffnung aus dem Tundish austretenden versprühten Schmelzetröpfchen kann eine Fadenbildung nicht verhindert werden, welche hauptsächlich auf die erhöhte Oberflächenspannung der erstarrenden Schmelzetröpfchen zurückzuführen ist. Durch die Anordnung einer Ringdüse innerhalb der Sprühkammer kann nun zusätzlich Dampf und/oder Heißgase, wie z.B. Verbrennungsabgase in der Sprühkammer ausgestoßen werden, wobei durch Konakt mit den erstarrenden Schmelzetröpfchen diese wieder erhitzt werden, wodurch die Oberflächenspannung herabgesetzt und die Tröpfchengröße weiter verringert werden kann. Dampf bzw. Heißgase werden bevorzugt parallel zur Achse der Lanze ausgestoßen, wodurch ein die Austrittsöffnung des Tundish umgebender Dampf- bzw. Heißgasmantel ausgebildet wird, welcher den für die Expansion der versprühten Schmelzetröpfchen zur Verfügung stehenden Raum begrenzt. Insbesondere werden von dem aus der Ringdüse ausgestossenen Dampf bzw. Heißgas die Schmelzetröpfchen im Randbereich des aus dem Tundish austretenden Schmelzetröpfchenstrahls erfaßt, welche am stärksten abgekühlt wurden und somit am ehesten zur Fadenbildung neigen. Mit Vorteil ist die Ausbildung daher so getroffen, daß die Ringdüse eine Zuleitung für Dampf und/oder Heißgase insbesondere mit einer die Temperatur des austretenden Schlackenstrahles übersteigenden Temperatur aufweist.

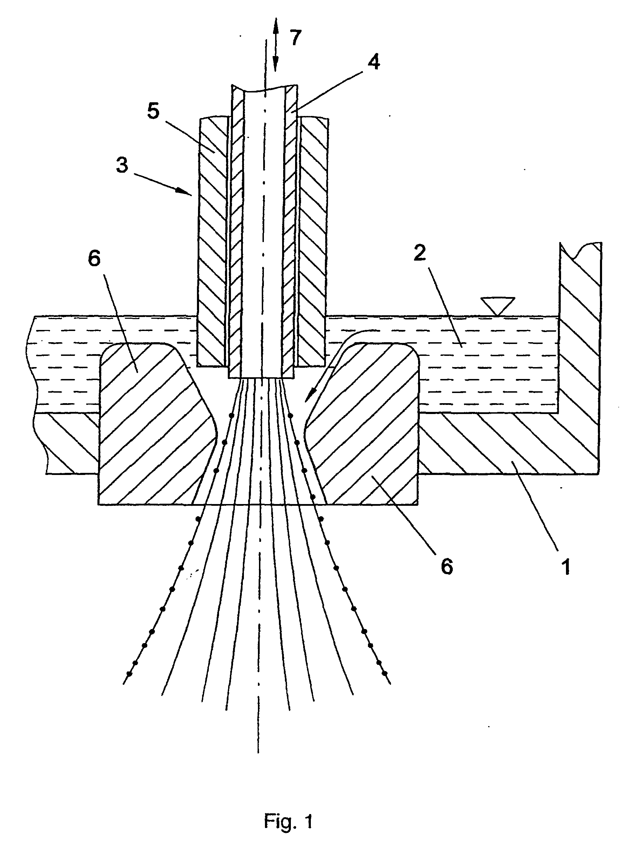

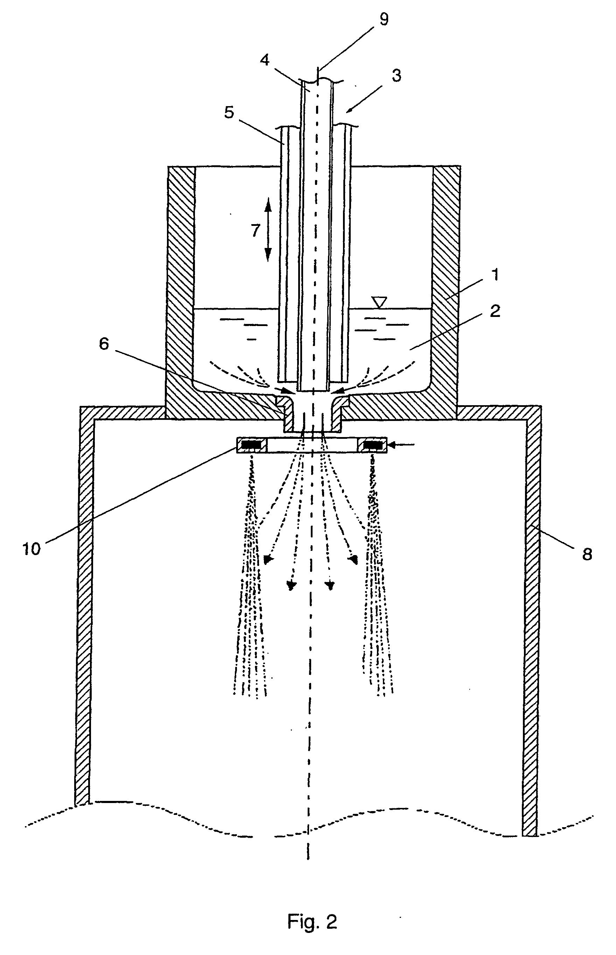

Die Erfindung wird nachfolgend anhand eines in der Zeichnung schematisch dargestellten Ausführungsbeispieles näher erläutert. In dieser zeigt Fig. 1 eine Teilansicht eines Schlackentundish mit einer Auslauföffnung und Fig. 2 einen Schlackentundish mit einer angeschlossenen Sprühkammer.

In Fig. 1 ist der Boden und eine Seitenwand eines Schlackentundish mit 1 bezeichnet. Im Tundish befindet sich eine schmelzflüssige Schlacke 2, in welche eine Lanze 3 eintaucht. Die Lanze 3 besteht aus einem Innenrohr 4 aus hochtemperaturfestem Stahl und einem Außenrohr bzw. einer Hülse 5 aus Graphit. Im Boden des Schlackentundish ist ein Düsenstein 6 angeordnet, welcher selbst wiederum aus Graphit ausgebildet sein kann, wobei bei Verwendung von Graphit für das Material der Hülse 5 bzw. des Düsensteins 6 lediglich darauf Rücksicht genommen werden muß, daß die Schmelze 2 nicht Materialien enthält, in welchen Kohlenstoff löslich ist. Dies gilt insbesondere dann, wenn die Schmelze keine Eisenschmelze ist und wenn die Schmelze weder Eisenoxide noch Chromoxide enthält.

Die beiden Bauteile der Lanze 3, nämlich das Innenrohr 4 und die Hülse 5, können jeweils gesondert in Richtung des Doppelpfeils 7 in Höhenrichtung verstellt werden. Eine Verschiebung der Außenhülse 5 definiert hierbei zum einen die Breite des Einlaßspaltes für flüssige Schmelzen. Zum anderen kann bei Verwendung von Graphit für das Material der Hülse 5 und des Düsensteins 6 ein stabiler Lichtbogen zwischen diesen beiden als Elektroden wirksamen Bauteilen aufgebaut werden, sodaß die Geometrie und die definierte eingestellte Spaltbreite nicht durch Erstarrungsvorgänge beeinträchtigt werden kann. Durch Verstellung des zentralen Rohres 4 der Lanze 3 kann nun die Strahlgeometrie in weiten Grenzen eingestellt und an das jeweilige Treibmedium angepaßt werden. Insgesamt gelingt es mit einer derartigen, aus zwei koaxialen Rohren gebildeten Lanze, nicht nur thermische Probleme und Korrosionsprobleme zu beherrschen, sondern auch eine definierte Strahlgeometrie einzustellen, welche über einen langen Zeitraum im Betrieb aufrecht erhalten werden kann.

In Fig. 2 ist wiederum ein Schlackentundish ersichtlich, in welchem sich die schmelzflüssige Schlacke 2 befindet. Es ist wiederum ein in die Schlacke eintauchendes Innenrohr 4 einer Lanze 3 ersichtlich, wobei das Innenrohr 4 von einem Wehrrohr 5 ummgeben ist. An den Schlackentundish 1 ist nun eine Sprühkammer 8 angeschlossen, wobei konzentrisch zur Achse 9 der Lanze ein Ringdüsenkranz 10 angeordnet ist. Der aus dem Ringdüsenkranz 10 austretende Dampf bzw. Heißgasstrom ist im wesentlichen parallel zur Achse 9 der Lanze 3 gerichtet und kommt mit dem äußeren Bereich der zerstäubten Schmelzetröpfchen in Kontakt. Die bereits zumindest teilweise abgekühlten Schmelzetröpfchen werden dadurch wieder erhitzt und werden, begünstigt durch die auf diese Art und Weise herabgesetzte Oberflächenspannung, weiter zerkleinert und zerstäubt. Dadurch ist eine noch feinere Zerstäubung der Schmelze möglich.

## Patentansprüche

1. Einrichtung zum Zerstäuben von flüssigen Schmelzen, insbesondere oxidischen Schlacken oder Gläsern, mit einem Schlackentundish und einer Auslaßöffnung, in welche eine Lanze zum Einstoßen von Gasen oder Dampf unter Ausbildung eines Ringspaltes eintaucht, **dadurch gekennzeichnet, daß** die Lanze (3) von zwei koaxialen Rohren (4,5) gebildet ist, welche gesondert voneinander in axialer Richtung (7) verstellbar sind und in ihrer jeweiligen axialen Verschiebelage festlegbar sind.

2. Einrichtung nach Anspruch 1, **dadurch gekennzeichnet, daß** die Auslaßöffnung als Düsenstein (6) und das Außenrohr bzw. die Hülse (5) der Lanze (3) aus elektrisch leitfähigem Material, insbesondere Graphit, bestehen.

3. Einrichtung nach Anspruch 1 oder 2, **dadurch gekennzeichnet, daß** das zentrale Rohr (4) der Lanze (3) aus keramischem Material oder aus hochtemperaturfestem Stahl besteht.

4. Einrichtung nach Anspruch 1, 2 oder 3, **dadurch gekennzeichnet, daß** der Düsenstein (6) eine konische Einlauföffnung und eine entgegengesetzt konisch ausgebildete, zur Mündung divergierende Auslaßöffnung aufweist.

5. Einrichtung nach einem der Ansprüche 1 bis 4, **dadurch gekennzeichnet, daß** der Düsenstein (6) und das Außenrohr bzw. die Hülse (5) mit einer Stromquelle zur Ausbildung einer elektrischen Beheizung im Bereich des Düsensteins (6) verbunden sind.

6. Einrichtung nach einem der Ansprüche 1 bis 5, **dadurch gekennzeichnet, daß** koaxial zur Auslauföffnung in einer an den Schlackentundish angeschlossenen Sprühkammer wenigstens eine Ringdüse angeordnet ist.

7. Einrichtung nach Anspruch 6, **dadurch gekennzeichnet, daß** die Achsen der Düsenaustrittsöffnungen im wesentlichen parallel zur Achse der Lanze oder divergierend gerichtet sind.

8. Einrichtung nach Anspruch 6 oder 7, **dadurch gekennzeichnet, daß** die Ringdüse eine Zuleitung für Dampf und/oder Heißgase, insbesondere mit einer die Temperatur des austretenden Schlackenstrahls übersteigenden Temperatur, aufweist.

## Claims

1. A device for atomizing liquid melts, in particular oxidic slags or glasses, including a slag tundish and an outlet opening into which a lance is immersed to inject gases or vapor while forming an annular gap, **characterized in that** the lance (3) is comprised of two coaxial tubes (4, 5) which are separately displaceable in the axial direction and fixable in their respective axially displaced positions.

2. A device according to claim 1, **characterized in that** the outlet opening in the form of a nozzle block (6) and the external tube or sleeve (5) of the lance (3) are made of an electrically conductive material, in particular graphite.

3. A device according to claim 1 or 2, **characterized in that** the central tube (4) of the lance (3) is made of a ceramic material or of high-temperature-resistant steel.

4. A device according to claim 1, 2 or 3, **characterized in that** the nozzle block (6) comprises a conically designed inlet opening and an oppositely conical outlet opening diverging towards the mouth.

5. A device according to any one of claims 1 to 4, **characterized in that** the nozzle block (6) and the external tube or sleeve (5) are connected with a power source to provide electrical heating in the region of the nozzle block (6).

6. A device according to any one of claims 1 to 5, **characterized in that** at least one annular nozzle is arranged coaxially with the outlet opening in a spraying chamber connected to the slag tundish.

7. A device according to claim 6, **characterized in that** the axes of the nozzle outlet openings are oriented substantially parallel with the axis of the lance, or in a diverging manner.

8. A device according to claim 6 or 7, **characterized in that** the annular nozzle comprises a duct for supplying vapor and/or hot gases particularly at a temperature exceeding the temperature of the emerging slag jet.

## Revendications

1. Dispositif pour pulvériser des matières fondues liquides, en particulier des laitiers oxydiques ou des verres, avec un avant-creuset pour laitier et un orifice de sortie, dans lequel une lance pour l'injection de gaz ou de vapeur plonge en formant une fente annulaire, **caractérisé en ce que** la lance (3) est formée par deux tube (4, 5) coaxiaux, qui sont déplaçables séparément l'un de l'autre dans la direction axiale (7) et peuvent être immobilisés dans leur position de déplacement axial respective.

2. Dispositif selon la revendication 1, **caractérisé en ce que** l'orifice de sortie en tant que pierre de buse (6) et le tube extérieur ou le fourreau (5) de la lance (3) sont constitués d'un matériau électroconducteur, en particulier de graphite.

3. Dispositif selon la revendication 1 ou 2, **caractérisé en ce que** le tube central (4) de la lance (3) est constitué de matériau céramique ou d'acier résistant aux températures élevées.

4. Dispositif selon la revendication 1, 2 ou 3, **caractérisé en ce que** la pierre de buse (6) présente un orifice d'entrée conique et un orifice de sortie doté d'une forme conique de sens opposé et divergent en direction du débouché.

5. Dispositif selon l'une des revendications 1 à 4, **caractérisé en ce que** la pierre de buse (6) et le tube extérieur ou le fourreau (5) sont reliés à une source de courant pour la réalisation d'un chauffage électrique dans la zone de la pierre de buse (6).

6. Dispositif selon l'une des revendications 1 à 5, **caractérisé en ce qu'**au moins une buse annulaire est disposée, sur le même axe que l'orifice de sortie, dans une chambre de pulvérisation raccordée à l'avant-creuset pour laitier.

7. Dispositif selon la revendication 6, **caractérisé en ce que** les axes des orifices de sortie des buses sont orientés sensiblement parallèlement à l'axe de la lance ou dans une direction divergente par rapport à celui-ci.

8. Dispositif selon la revendication 6 ou 7, **caractérisé en ce que** la buse annulaire présente une arrivée pour de la vapeur et/ou des gaz chauds, en particulier à une température dépassant la température du jet de laitier sortant.
